# FASCICULE DE BREVET EUROPEEN

(11) **EP 0 329 554 B1**
(45) Date de publication et mention de la délivrance du brevet: **27.01.1993**
(21) Numéro de dépôt: 89400424.1
(22) Date de dépôt: 15.02.1989
(51) Int. Cl.: G21C 17/06, G01M 3/36

(54) **Procédé et installation de détection de crayons non étanches dans un assemblage de combustible nucléaire**
Verfahren und Einrichtung zum Auffinden undichter Stäbe in einer Kernbrennelementanordnung
Process and installation for the detection of leaking rods in a nuclear fuel assembly

(30) Priorité: 18.02.1988 FR 8801926
(43) Date de publication de la demande: 23.08.1989
(73) Titulaire: COMMISSARIAT A L'ENERGIE ATOMIQUE, 75015 Paris Cédex 15 (FR)
(72) Inventeur: Chenebault, Pierre, F-38000 Grenoble (FR); Lemaignan, Clément, F-38340 Voreppe (FR)
(74) Mandataire: Mongrédien, André

(56) Documents cités:
- EP-A- 0 100 941
- DE-A- 2 659 555
- FR-A- 2 509 898
- GB-A- 2 178 858

## Description

L'invention concerne un procédé permettant de détecter des crayons non étanches dans un assemblage de combustible nucléaire préalablement irradié dans le coeur d'un réacteur nucléaire, ainsi qu'une installation permettant de mettre en oeuvre ce procédé.

Dans les réacteurs nucléaires à eau sous pression, à eau bouillante ou refroidis par un métal liquide, le combustible nucléaire se présente sous la forme de pastilles disposées en piles dans des gaines obturées à leurs extrémités par des bouchons, pour constituer des crayons élémentaires qui sont rassemblés en faisceau au moyen d'une ossature, de façon à former des assemblages de combustible nucléaire constituant chacun une unité de manutention.

Après une certaine période de fonctionnement du réacteur, celui-ci est arrêté afin qu'une partie des assemblages constituant le coeur soit remplacée par des assemblages neufs et que les assemblages restant dans le coeur soient déplacés. Au cours de ces opérations, il est d'usage de repérer les assemblages contenant un ou plusieurs crayons non étanches.

Dans l'état actuel de la technique, le repérage de ces assemblages est effectué en analysant le relâchement des espèces radioactives, lors d'une opération dite de "resuage". Cette technique permet de repérer les assemblages contenant des crayons non étanches et, dans certains cas, de quantifier la taille du ou des défauts d'étanchéité des crayons qu'ils contiennent. Cependant, elle reste muette sur la localisation des crayons effectivement défectueux à l'intérieur des assemblages.

Dans le cas particulier des réacteurs à eau sous pression et à eau bouillante, on sait détecter les crayons défectueux au sein d'un assemblage en repérant les crayons contenant de l'eau. En effet, en cas de rupture de la gaine du crayon, la pression différentielle entre l'eau du circuit primaire du réacteur et le gaz inerte contenu dans le crayon conduit à une entrée d'eau dans ce crayon. La présence d'eau à l'intérieur des crayons peut être détectée soit en étudiant la transmission des ondes ultrasonores dans la partie supérieure du crayon normalement remplie de gaz, soit en analysant l'amortissement des ondes lors d'une propagation le long du crayon. Cette dernière technique est illustrée par le document EP-A-186554 correspondant au FR-A-2 573 906.

Cependant, ces deux techniques de détection de crayons non étanches dans les assemblages de combustible nucléaire présentent différents inconvénients. En premier lieu, leur application est limitée au cas des réacteurs à eau. En outre, la première technique n'est efficace que si la chambre d'expansion normalement remplie de gaz à la partie supérieure des crayons est totalement remplie d'eau, ce qui n'est pas toujours le cas. Enfin, la seconde technique perd pratiquement toute efficacité lorsque le jeu entre les pastilles de combustible et la gaine est réduit, c'est-à-dire lorsque la durée d'irradiation des crayons dépasse un certain seuil.

La présente invention a précisément pour objet un nouveau procédé de détection de crayons non étanches dans un assemblage de combustible nucléaire, dont le principe repose sur le fait que la perte d'étanchéité d'un crayon se traduit par une sortie des gaz qu'il contient lors de la dépressurisation du circuit primaire consécutive à un arrêt du réacteur, ce qui permet d'utiliser ce procédé dans tous les types de réacteurs et d'éviter les inconvénients des procédés reposant sur une détection de l'eau éventuellement présente à l'intérieur des crayons.

L'invention a aussi pour objet une installation permettant de mettre en oeuvre ce procédé.

De façon plus précise, il est proposé un procédé de détection de crayons non étanches, dans un assemblage de combustible nucléaire comportant un faisceau de crayons normalement étanches contenant des gaz sous pression, ce procédé étant caractérisé par le fait qu'il consiste à :
- soumettre l'assemblage à une pression inférieure à la pression des gaz contenus dans les crayons, pour évacuer les gaz des crayons non étanches ;
- faire varier la température des gaz entre deux valeurs données ; et
- mesurer simultanément, sur chaque crayon, une déformation engendrée en faisant varier la température des gaz, de façon à distinguer les crayons non étanches, pratiquement exempts de déformation, des crayons étanches qui se déforment.

Dans la pratique, l'assemblage est soumis à une pression inférieure à la pression des gaz contenus dans les crayons par la simple dépressurisation du circuit primaire et l'introduction de l'assemblage dans une piscine. En faisant varier la température des gaz contenus dans les crayons, on crée une déformation élastique des gaines des crayons étanches, alors que les gaines des crayons non étanches ne sont pratiquement pas déformées. En mesurant la déformation des gaines, et de préférence la déformation diamétrale, on peut donc détecter et localiser les crayons défectueux, qui sont les seuls à ne pas se déformer.

De préférence, on fait varier la température des gaz en chauffant la partie supérieure de l'assemblage dans laquelle se trouvent les chambres d'expansion des crayons contenant la majeure partie des gaz. Pour permettre une distinction claire des crayons non étanches, on élève de préférence la température des gaz d'au moins environ 50°C.

Afin que la mesure de la déformation diamétrale des crayons ne prenne pas en compte une déformation résultant de la dilatation thermique des gaines, on réalise de préférence la mesure à la partie inférieure de chaque crayon. En effet, cette partie reste pratiquement isotherme à la température de l'eau de la piscine lorsque seule la partie supérieure de l'assemblage est chauffée.

L'invention concerne également une installation de détection de crayons non étanches, dans un assemblage de combustible nucléaire comportant un faisceau de crayons normalement étanches contenant des gaz sous pression, cette installation étant caractérisée par le fait qu'elle comprend, à l'intérieur d'une piscine de réception de l'assemblage, un moyen pour faire varier la température des gaz entre deux valeurs données et un dispositif de mesure d'une déformation engendrée sur chaque crayon par ledit moyen pour faire varier la température, ce dispositif de mesure permettant de distinguer les crayons non étanches, pratiquement exempts de déformation, des crayons étanches, qui se déforment.

Pour faire varier la température des gaz, on place de préférence la partie supérieure de l'assemblage dans un manchon chauffant dans lequel on peut faire circuler de l'eau ou un gaz préalablement chauffés.

Le dispositif de mesure, qui détecte de préférence une déformation diamétrale de chaque crayon, peut notamment être monté sur un support muni de moyens de positionnement de l'extrémité inférieure de l'assemblage, par l'intermédiaire d'une table animée de mouvements horizontaux orthogonaux.

Dans un mode de réalisation préféré de l'invention, le dispositif de mesure comprend des lames parallèles aptes à être insérées de part et d'autre des crayons, et des capteurs montés sur ces lames en des emplacements tels que deux capteurs soient disposés de part et d'autre de chaque crayon lorsque les lames sont insérées dans l'assemblage.

Les capteurs peuvent être soit des jauges de déformation portées par des lamelles souples solidaires des lames et aptes à être amenées au contact des crayons, soit des capteurs capacitifs fixés rigidement sur les lames et aptes à être espacés des crayons.

On décrira maintenant, à titre d'exemple nullement limitatif, un mode de réalisation préféré de l'invention en se référant aux dessins annexés dans lesquels :
- la figure 1 est une vue en coupe longitudinale représentant un crayon combustible d'un assemblage de combustible nucléaire ;
- la figure 2 est une vue de côté représentant de façon schématique une installation de détection de crayons non étanches dans un assemblage de combustible nucléaire, cette installation étant réalisée conformément à l'invention ;
- la figure 3 est une vue en perspective représentant la partie inférieure de l'installation de la figure 2, incluant notamment le dispositif de mesure de la déformation diamétrale des crayons de l'assemblage ;
- la figure 4 est une vue de côté de l'une des lames du dispositif de mesure de la figure 3 illustrant à plus grande échelle l'implantation des capteurs sur cette lame ; et
- la figure 5 est une section selon la ligne V-V de la figure 4.

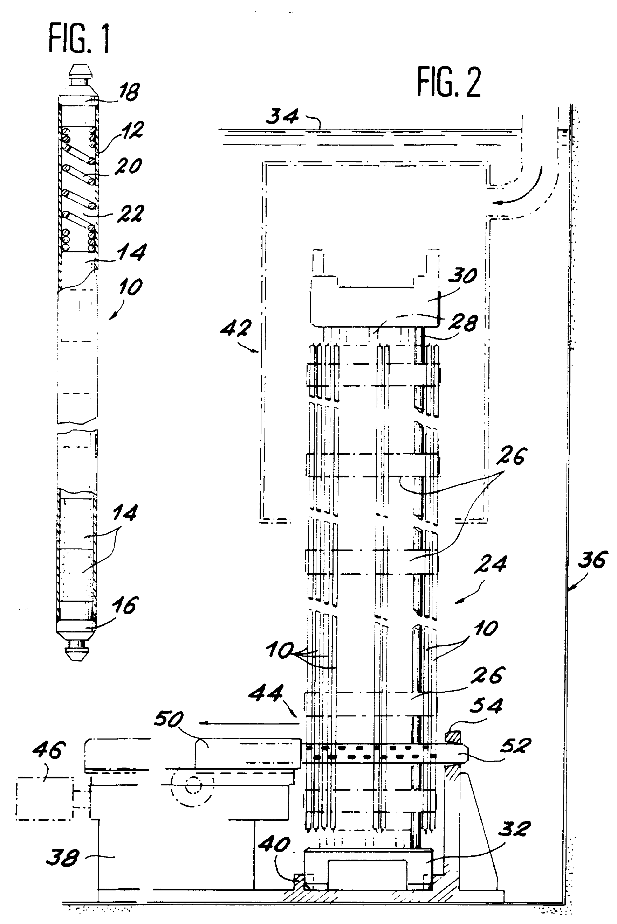

La figure 1 représente un crayon combustible dont la structure est bien connue des spécialistes des réacteurs nucléaires. Un tel crayon, désigné de façon générale par la référence 10, comprend une gaine tubulaire 12 dans laquelle est logé un empilement de pastilles 14 de combustible nucléaire. La gaine 12 est obturée de façon étanche à son extrémité inférieure par un bouchon 16 et à son extrémité supérieure par un bouchon 18. L'empilement de pastilles 14 est maintenu contre le bouchon inférieur 16 par un ressort de compression hélicoïdal 20 prenant appui sur le bouchon supérieur 18. Le ressort 20 est placé dans une chambre d'expansion 22. Des gaz inertes sous pression sont également présents à l'intérieur de la gaine 12, c'est-à-dire principalement dans la chambre d'expansion 22 et dans les espaces formés entre les pastilles 14 adjacentes et entre ces pastilles et la gaine 12.

Comme le montre schématiquement la figure 2 et toujours de façon connue, un assemblage 24 de combustible nucléaire comprend un faisceau de crayons 10 reliés entre eux par une ossature rigide. Cette ossature se compose de grilles d'espacement 26, de tubes guides 28 disposés parmi les crayons 10 et reliant entre elles les grilles 26, d'une tête d'assemblage 30 fixée aux extrémités supérieures des tubes-guides et d'un pied d'assemblage 32 fixé aux extrémités inférieures des tubes guides. Les crayons 10 ainsi que les tubes guides 28 sont disposés en rangées selon un réseau à pas généralement carré et espacés les uns des autres d'une distance déterminée.

Lorsque l'assemblage 24 est placé dans le coeur d'un réacteur nucléaire en fonctionnement, la pression régnant dans le circuit primaire du réacteur est en principe supérieure à la pression des gaz contenus dans les crayons 10. Au contraire, lorsque le circuit primaire est dépressurisé à l'occasion d'un arrêt du réacteur, la pression des gaz présents dans les crayons devient supérieure à la pression extérieure. Dans le cas de crayons non étanches, la pression interne de ces crayons s'équilibre alors avec la pression externe, ce qui se traduit par une sortie des gaz contenus initialement à l'intérieur de ces crayons. Au contraire, les gaz sous pression présents dans les crayons étanches restent en totalité dans ces crayons.

L'invention repose précisément sur cette observation et consiste à mettre en évidence l'existence des gaz sous pression dans les crayons étanches, et l'absence de gaz sous pression dans les crayons non étanches. Plus précisément, l'existence des gaz sous pression à l'intérieur des crayons étanches est détectée en mesurant la déformation élastique de la gaine consécutive à une expansion thermique des gaz qu'elle contient. Lorsqu'aucune déformation notable n'est mesurée, cela révèle que le crayon concerné n'est plus étanche.

Pour effectuer leur examen en vue de détecter les crayons non étanches selon le principe qui vient d'être brièvement exposé, les assemblages 24 sont d'abord introduits dans une piscine de travail 36 remplie d'eau 34 et dont une partie seulement apparaît sur la figure 2. Cette piscine contient une ou plusieurs installations de détection conformes à l'invention. La pression qui y règne est inférieure à la pression des gaz contenus normalement dans les crayons, afin que l'échappement des gaz hors des crayons non étanches puisse effectivement se produire.

L'installation de détection proprement dite comprend un support 38 placé dans le fond de la piscine 36 et équipé d'ergots de positionnement 40 entre lesquels vient s'emboîter le pied 32 d'un assemblage 24 à examiner.

L'installation de détection comprend de plus une hotte chauffante 42 apte à venir coiffer la partie supérieure de l'assemblage 24 dont le pied est emboîté entre les ergots de positionnement 40.

Comme on le verra ultérieurement, le dispositif de chauffage 42 permet de faire varier la température des gaz contenus dans les crayons entre deux valeurs données. Ce dispositif est mobile, de façon à pouvoir être escamoté lors de la mise en place de l'assemblage 24 sur le dispositif de positionnement 40, puis amené en position de fonctionnement sur la partie supérieure de l'assemblage, comme l'illustre la figure 2.

Enfin, l'installation de détection selon l'invention comprend un dispositif de mesure 44 monté sur le support 38 et dont la conception lui permet de surveiller les déformations diamétrales des crayons 10 à proximité de l'extrémité inférieure de ces derniers.

Toutes les parties immergées de l'installation sont réalisées en des matériaux inoxydables tels que de l'acier inoxydable.

La température de l'eau 34 contenue dans la piscine étant constante et généralement comprise entre 30°C et 40°C, le manchon 42 qui coiffe la partie supérieure de l'assemblage 24 est conçu de façon à élever progressivement la température des gaz contenus dans les crayons 10 d'au moins environ 50°C. L'élévation de température effectivement réalisée est calculée en tenant compte de la pression de remplissage initiale des crayons, du taux de relâchement de gaz de fission des pastilles à l'intérieur des crayons, de la dilatation des gaz et des déformations élastiques imposées à la gaine. Dans les conditions les plus courantes, ce calcul conduit à une variation de diamètre de l'ordre du micromètre, pour une variation de température de 50°C. Cette valeur est suffisante dans la plupart des cas pour distinguer les crayons non étanches des crayons étanches. Elle peut cependant être augmentée dans certains cas particuliers.

Lorsque la variation de température que l'on désire obtenir est comprise entre 50°C et 60°C, on fait circuler à l'intérieur du manchon 42 de l'eau préalablement chauffée dans un dispositif annexe (non représenté) tel qu'un échangeur de chaleur.

Au contraire, lorsqu'on désire obtenir une variation de température supérieure à 60°C, on fait circuler à l'intérieur du manchon 42 un courant d'air ou de gaz chauffé auparavant dans un dispositif annexe (non représenté), ce qui a pour effet de dénoyer la partie supérieure de l'assemblage 24.

Il est à noter que la disposition du manchon 42 autour de la partie supérieure de l'assemblage 24 permet de chauffer directement les gaz contenus dans la chambre d'expansion 22 de chacun des crayons 10 de l'assemblage en évitant de chauffer le reste des crayons. En plaçant le dispositif de mesure 44 à proximité de l'extrémité inférieure des crayons 10, on peut ainsi observer la dilatation élastique des gaines 12 des crayons étanches dûe à l'expansion des gaz qu'ils contiennent, sans que la mesure ne soit affectée par la dilatation thermique des gaines, puisque la température est pratiquement constante à ce niveau.

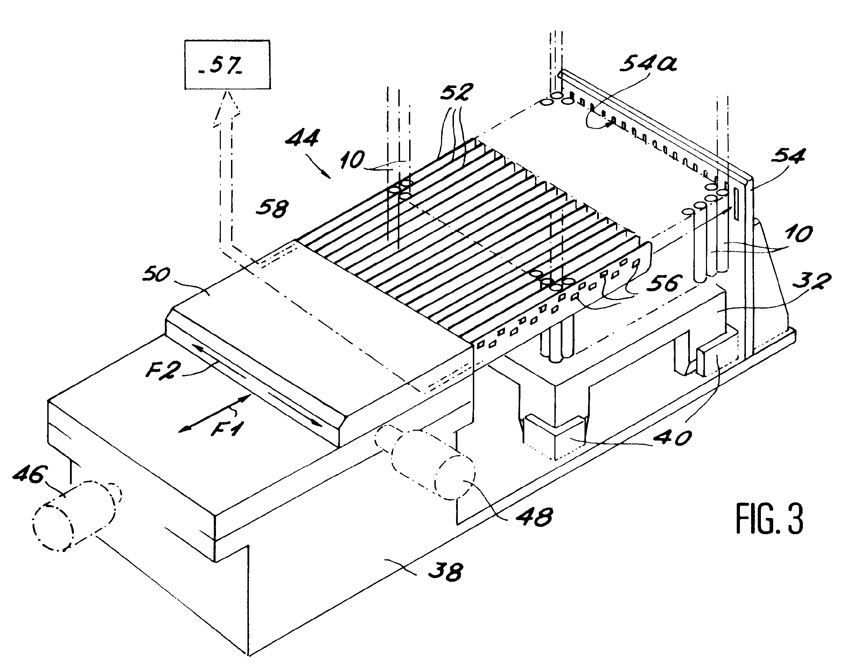

En se reportant à la figure 3, on décrira maintenant plus en détail la structure du dispositif de mesure 44, ainsi que son montage sur le support 38.

Comme l'illustre cette figure, le support 38 comporte principalement une plaque horizontale sur laquelle font saillie des ergots de positionnement 40, en forme de V, à l'intérieur desquels vient s'engager le pied 32 de l'assemblage.

Le support 38 comporte en outre des moyens 46 et 48 pour déplacer une table horizontale 50 selon deux directions horizontales orthogonales illustrées par les flèches F1 et F2 sur la figure. Lorsque l'assemblage est positionné sur le support 38 par les ergots 40, ces directions de déplacement de la table 50 sont parallèles aux deux directions orthogonales définies par le réseau à pas carré formé par les crayons 10 de l'assemblage. Les moyens de commande 46 et 48 sont des moteurs électriques étanches conçus de façon à pouvoir fonctionner immergés dans la piscine.

La table 50 supporte une série de lames 52 régulièrement espacées, disposées dans des plans verticaux parallèles et faisant saillie horizontalement vers l'assemblage 24, à partir de l'un des côtés de la table 50. De façon plus précise, le nombre de lames 52, l'écartement entre ces lames ainsi que l'épaisseur des lames sont choisis de telle sorte qu'une lame puisse venir se placer ou s'insérer de part et d'autre de chacune des rangées de crayons 10 de l'assemblage. Pour cela, le nombre des lames 52 est supérieur d'au moins une unité au nombre de rangées de crayons, l'écartement entre les lames correspond au pas du réseau formé par les crayons et l'épaisseur des lames est inférieure à l'espacement qui existe entre les crayons. En outre, la longueur des lames 52 est légèrement supérieure à la longueur de chacune des rangées de crayons 10 de l'assemblage.

Grâce à ces caractéristiques, lorsque le pied 32 de l'assemblage est placé dans les ergots de positionnement 40, il est possible en actionnant le moteur 48 d'aligner les lames 52 avec les couloirs formés entre les rangées de crayons adjacentes. En actionnant ensuite le moteur 46, on insère simultanément toutes les lames 52 de part et d'autre des rangées de crayons 10, jusqu'à ce que les extrémités des lames ressortent de l'autre côté de l'assemblage et pénètrent dans des fentes 54a formées dans un peigne 54 fixé sur le support 38, du côté opposé à la table 50. Ce peigne 54 a pour fonction de réduire le battement des lames 52 en cours de mesure.

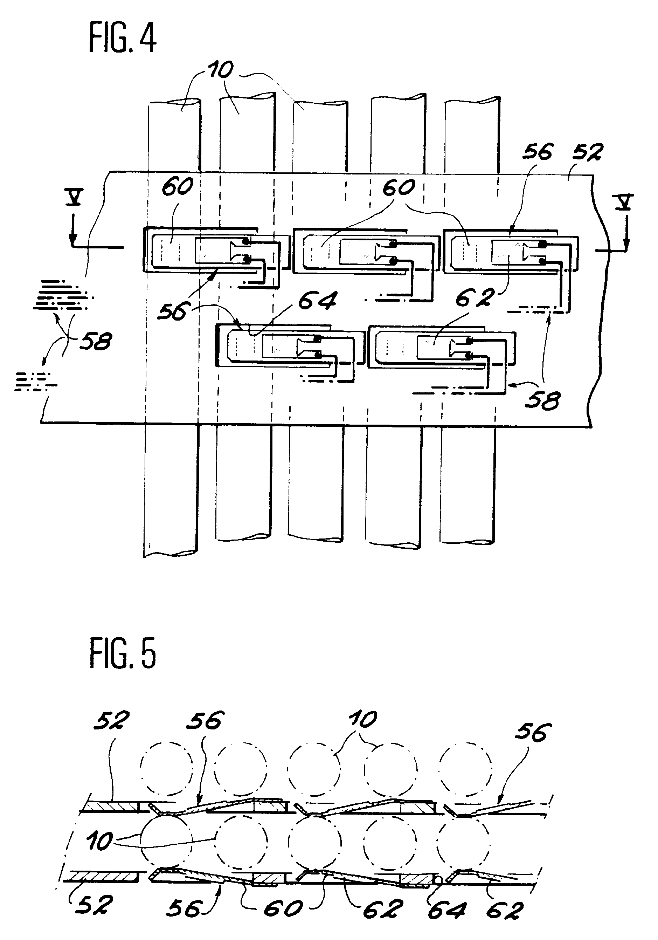

Comme le montrent mieux les figures 4 et 5, chacune des lames 52 supporte une série de capteurs de métrologie 56. Ces capteurs 56 sont disposés de façon à se trouver en face de chacun des crayons 10 qui lui sont adjacents lorsque les lames sont introduites en totalité dans l'assemblage. De cette manière, comme l'illustre bien la figure 5, chacun des crayons 10 est placé entre deux capteurs 56 supportés par deux lames 52 adjacentes et situés en des emplacements diamétralement opposés. Chaque capteur 56 est relié à des instruments de mesure extérieurs 57 (figure 3) par des fils de liaison 58 supportés par les lames 52.

La paire de capteurs 56 associée à chaque crayon 10 permet de mesurer le diamètre de ce crayon ou, plus précisément, la variation de ce diamètre lors d'une élévation de température des gaz contenus dans les crayons réalisée à l'aide du manchon chauffant 42. En effet, une mesure relative de l'évolution du diamètre de chacun des crayons lors de l'échauffement des gaz est suffisante pour différencier les crayons non étanches, qui ne se déforment pratiquement pas, des crayons étanches, qui subissent une déformation diamétrale mesurable.

Pour tenir compte du faible espace disponible entre les rangées de crayons adjacentes, dans l'exemple de réalisation représenté sur les figures 4 et 5, on utilise comme capteurs 56 des lamelles souples 60, de forme rectangulaire, supportant chacune une jauge de déformation 62. Plus précisément, chaque lamelle 60, est placée dans une fenêtre 64 rectangulaire et de plus grande dimension formée dans la lame 52 correspondante et solidaire de cette dernière par l'une de ses extrémités. En outre, chaque lamelle souple 60 est pliée de telle sorte que son extrémité opposée soit située hors du plan de la lame 52 qui la supporte et en contact avec l'un des crayons 10 lorsque les lames sont placées de part et d'autre des crayons.

Chacune des jauges 62 est reliée aux instruments de mesure extérieurs 57 par les fils de liaison 58. Compte tenu du faible écartement existant entre les crayons 10, les capteurs 56 sont disposés en quinconce sur chacune des lames 52.

Les lamelles 60 peuvent notamment être réalisées en acier inoxydable de faible épaisseur, les jauges 62 étant par exemple des jauges de déformation à trames pelliculaires, telles que des jauges Vishay 187 UV, 250 UV ou similaires.

Dans une variante de réalisation non représentée, également compatible avec le faible espace disponible entre les rangées de crayons 10, on peut également utiliser des capteurs capacitifs fixés directement et de façon rigide sur les lames 52, ces capteurs ne touchant pas les crayons 10.

Dans le mode de réalisation illustré sur les figures 4 et 5, dans lequel les capteurs 56 comprennent des jauges de déformation 62 montées sur des lamelles souples 60, pour une dilatation de 1 µm de chaque crayon 10, le dispositif enregistre une déformation apparente de 20.10⁻⁶, dont la mesure est facilement accessible à l'aide d'un pont d'extensiométrie standard tel que le pont Vishay VE 20A.

Pour effectuer une mesure en parallèle de la déformation de tous les crayons, un système d'acquisition automatique tel qu'un système de type HP 3497A assorti de tiroirs de mesure 070, ou similaire, peut être utilisé.

En pratique, lorsqu'on désire contrôler les crayons 10 d'un assemblage 24 de combustible nucléaire, on place d'abord le pied 32 de cet assemblage sur les ergots de positionnement 40 comme l'illustrent les figures 2 et 3. On positionne ensuite le manchon chauffant 42 sur la partie supérieure de l'assemblage et on insère les lames 52 de part et d'autre des rangées de crayons de l'assemblage au moyen du moteur 46, après avoir positionné correctement ces lames dans l'alignement des couloirs formés entre les crayons au moyen du moteur 48. L'installation est alors prête pour effectuer le contrôle souhaité.

A l'aide des instruments de mesure 57 reliés aux différents capteurs 56 par les fils de liaison 58 supportés par les lames 52, on repère le diamètre présenté initialement par chacun des crayons 10 de l'assemblage avant tout échauffement. On chauffe ensuite progressivement les gaz contenus dans la chambre d'expansion 22 de chacun des crayons de l'assemblage au moyen du manchon chauffant 42, de façon à accroître la température de ces gaz d'une valeur déterminée à l'avance et au moins égale à environ 50°C, comme on l'a indiqué précédemment.

Simultanément, on mesure à l'aide des instruments 57 reliés aux capteurs les variations de diamètre de chacun des crayons 10, à proximité de l'extrémité inférieure de l'assemblage. De cette manière, on détecte et on localise le ou les crayons défectueux de l'assemblage, pour lesquels le diamètre reste pratiquement inchangé malgré le chauffage effectué par le manchon 42. En effet, ce chauffage ne conduit à aucune expansion thermique des gaz, puisque ces gaz se sont échappés lors de la dépressurisation du circuit primaire du réacteur. Au contraire, les crayons en bon état contiennent toujours des gaz sous pression dont l'échauffement obtenu à l'aide du manchon 42 conduit à leur expansion thermique et, par conséquent, à une déformation élastique de leurs gaines qui est repérée par les capteurs 56.

Au lieu de mesurer simultanément le diamètre de tous les crayons, le dispositif de mesure peut être conçu pour effectuer les mesures par rangée de crayons ou crayon par crayon.

## Revendications

1. Procédé de détection de crayons non étanches, dans un assemblage (24) de combustible nucléaire comportant un faisceau de crayons (10) dudit combustible normalement étanches contenant des gaz sous pression, ce procédé étant caractérisé par le fait qu'il consiste à :
- soumettre l'assemblage (24) à une pression inférieure à la pression des gaz contenus dans les crayons (10), pour évacuer les gaz des crayons non étanches ;
- faire varier la température des gaz entre deux valeurs données ; et
- mesurer simultanément, sur chaque crayon (10), une déformation engendrée en faisant varier la température des gaz, de façon à distinguer les crayons non étanches, pratiquement exempts de déformation, des crayons étanches, qui se déforment.

2. Procédé selon la revendication 1, caractérisé par le fait qu'on fait varier la température des gaz en chauffant la partie supérieure de l'assemblage (24).

3. Procédé selon la revendication 2, caractérisé par le fait qu'on chauffe la partie supérieure de l'assemblage (24) de façon à élever la température des gaz d'au moins environ 50°C.

4. Procédé selon l'une quelconque des revendications 1 à 3, caractérisé par le fait qu'on mesure sur chaque crayon (10) une déformation diamétrale.

5. Procédé selon la revendication 4, prise en combinaison avec l'une quelconque des revendications 2 et 3, caractérisé par le fait qu'on mesure la déformation diamétrale dans une partie inférieure de chaque crayon (10).

6. Procédé selon l'une quelconque des revendications 1 à 5, caractérisé par le fait qu'on soumet l'assemblage à une pression inférieure à la pression des gaz en plaçant cet assemblage dans une piscine (36).

7. Installation de détection de crayons non étanches, dans un assemblage (24) de combustible nucléaire comportant un faisceau de crayons (10) normalement étanches contenant des gaz sous pression, cette installation étant caractérisée par le fait qu'elle comprend, à l'intérieur d'une piscine (36) de réception de l'assemblage, un moyen (42) pour faire varier la température des gaz entre deux valeurs données et un dispositif de mesure (44) d'une déformation engendrée sur chaque crayon (10) par ledit moyen (42) pour faire varier la température, ce dispositif de mesure (44) permettant de distinguer les crayons non étanches, pratiquement exempts de déformation, des crayons étanches, qui se déforment.

8. Installation selon la revendication 7, caractérisée par le fait que le moyen pour faire varier la température est un manchon chauffant (42) apte à coiffer la partie supérieure de l'assemblage (24).

9. Installation selon la revendication 8, caractérisée par le fait que le manchon chauffant (42) chauffe l'eau entourant la partie supérieure de l'assemblage (24).

10. Installation selon la revendication 8, caractérisée par le fait que le manchon chauffant (42) chauffe un gaz entourant la partie supérieure de l'assemblage (24).

11. Installation selon l'une quelconque des revendications 7 à 10, caractérisée par le fait que le dispositif de mesure (44) est un dispositif mesurant une déformation diamétrale de chaque crayon.

12. Installation selon la revendication 11, caractérisée par le fait que le dispositif de mesure (44) est placé à proximité des extrémités inférieures des crayons (10).

13. Installations selon la revendication 12, caractérisée par le fait que le dispositif de mesure (44) est monté sur un support (38) muni de moyens de positionnement (40) de l'extrémité inférieure de l'assemblage (24).

14. Installation selon la revendication 13, caractérisée par le fait que le dispositif de mesure (44) est monté sur le support (38) par l'intermédiaire d'une table (50) à mouvements horizontaux orthogonaux.

15. Installation selon l'une quelconque des revendications 11 à 14, caractérisée par le fait que le dispositif de mesure (44) comprend des lames parallèles (52) aptes à être insérées de part et d'autre des crayons (10) et des capteurs (56) supportés par ces lames de façon qu'une paire de capteurs soit associée à chaque crayon lorsque les lames sont insérées dans l'assemblage.

16. Installation selon la revendication 15, caractérisée par le fait que les capteurs (56) comprennent des jauges de déformation (62) portées par des lamelles souples (60) fixées aux lames (52) et aptes à être amenées au contact des crayons (10).

17. Installation selon la revendication 15, caractérisée par le fait que les capteurs (56) sont des capteurs capacitifs fixés rigidement sur les lames (52) et aptes à être espacés des crayons (10).

## Patentansprüche

**1.** Verfahren zum Auffinden undichter Stäbe in einer Kernbrennelementeanordnung (24), welches ein Bündel an Stäben (10) der besagten Brennelemente, die normalerweise dicht sind und Gas unter Druck halten, zulässt, dadurch **gekennzeichnet,** daß es aus:
- der Anordnung (24), die einem kleineren Druck als dem Druck des in den Stäben (10) enthaltenen Gases unterliegt, um das Gas aus den undichten Stäben zu evakuieren;
- der Möglichkeit zur Änderung der Gastemperatur zwischen zwei gegebenen Werten; und
- der an jedem Stab gleichzeitigen Messung einer durch die Änderung der Gastemperatur erzeugten Verformung, um zwischen den undichten Stäben, die praktisch frei von Verformungen sind, und den dichten Stäben, die sich verformen, zu unterscheiden, besteht.

**2.** Verfahren gemäß dem Anspruch 1, dadurch **gekennzeichnet,**daß sich durch Erhitzen des oberen Teils der Anordnung (24) die Gastemperatur ändern läßt.

**3.** Verfahren gemäß dem Anspruch 2, dadurch **gekennzeichnet,** daß man den oberen Teil der Anordnung (24) erhitzt, um die Gastemperatur mindestens um ungefähr 50°C zu erhöhen.

**4.** Verfahren gemäß irgendeinem der Ansprüche 1 bis 3, dadurch **gekennzeichnet,** daß man an jedem Stab (10) eine diametrale Verformung mißt.

**5.** Verfahren gemäß dem Anspruch 4 in Verbindung mit irgendeinem der Ansprüche 2 und 3, dadurch **gekennzeichnet,** daß die Anordnung einem kleineren Druck als dem Gasdruck unterliegt, indem diese Anordnung in ein Wasserbecken (36) gesetzt wird.

**7.** Einrichtung zum Auffinden undichter Stäbe in einer Kernbrennelementeanordnung (24), welches ein Bündel an Stäben zulasst, die normalerweise dicht sind und Gas unter Druck halten, dadurch **gekennzeichnet,** daß sie im Inneren eines Wasserbeckens (36) zur Aufnahme der Anordnung ein Gerät (42) zur Änderung der Gastemperatur zwischen zwei gegebenen Werten, und eine Meßvorrichtung (44) für eine an jedem Stab (10) durch besagtes Gerät (42) zur Temperaturänderung erzeugte Verformung, welche die Unterscheidung zwischen undichten Stäben, die praktisch frei von Verformungen sind, und dichten Stäben, die sich verformen, beinhaltet.

**8.** Einrichtung gemäß dem Anspruch 7, dadurch **gekennzeichnet,** daß das Gerät zur Temperaturänderung eine beheizbare Umhüllung ist, welche dazu dient, den oberen Teil der Anordnung (24) abzudecken.

**9.** Einrichtung gemäß dem Anspruch 8, dadurch **gekennzeichnet,** daß die heizbare Umhüllung (42) das den oberen Teil der Anordnung (24) umgebende Wasser erhitz.

**10.** Einrichtung gemäß dem Anspruch 8, dadurch **gekennzeichnet,** daß die heizbare Umhüllung ein den oberen Teil der Anordnung (24) umgebendes Gas erhitzt.

**11.** Einrichtung gemäß ingendeinem der Ansprüche 7 bis 10, dadurch **gekennzeichnet,** daß die Meßvorrichtung (44) eine Vorrichtung ist, welche eine diametrale Verformung an jedem Stab mißt.

**12.** Einrichtung gemäß dem Anspruch 11, dadurch **gekennzeichnet,** daß die Meßvorrichtung (44) nahe bei den unteren Enden der Stäbe (10) plaziert ist.

**13.** Einrichtung gemäß dem Anspruch 12, dadurch **gekennzeichnet,** daß die Meßvorrichtung (44) auf eine Stütze (38) montiert ist, welche mit Positioniergeräten (40) an den unteren Enden der Anordnung (24) ausgestattet ist.

**14.** Einrichtung gemäß dem Anspruch 13, dadurch **gekennzeichnet,** daß die Meßvorrichtung (44) auf die Stütze (38) durch einen dazwischenliegenden Tisch (50) für horizontale, orthogonale Bewegungen montiert ist.

**15.** Einrichtung gemäß irgendeinem der Ansprüche 11 bis 14, dadurch **gekennzeichnet,** daß die Meßvorrichtung (44) parallele Platten (52), welche dazu dienen, zwischen zwei Reihen von Stäben (10) eingefügt zu werden, und Bügel (56), welche durch die Platten gestützt werden, so daß ein Bügelpaar mit jedem Stab verbunden ist, wenn die Platten in die Anordnung eingesetzt sind, umfaßt.

**16.** Einrichtung gemäß dem Anspruch 15, dadurch **gekennzeichnet,** daß die Bügel (56) Dehnmeßstreifen (62), welche durch die auf die Platten (52) fixierten und zum Kontakt mit den Stäben (10) dienenden biegsamen Plättchen (60) gehalten werden, umfaßt.

**17.** Einrichtung gemäß dem Anspruch 15, dadurch **gekennzeichnet,** daß die Bügel geeignete, fest auf den Platten (52) fixierte und als Abstandhalter zwischen den Stäben (10) dienende Bügel (56) sind.

## Claims

1. Method for detecting leaky rods in a nuclear fuel assembly (24) comprising a bundle of rods (10) of said fuel, which are normally sealed and contain pressurized gases, characterized in that said method consists of:
- subjecting the assembly (24) to a pressure lower than the pressure of the gases contained inside the rods (10) so as to remove the gases from the leaky rods;
- varying the temperature of the gases between two given values; and
- simultaneously measuring for each rod (10) a deformation produced by varying the temperature of the gases so as to distinguish the leaky rods, which are virtually free from deformation, from the sealed rods which warp.

2. Method according to claim 1, characterized in that the temperature of the gases is varied by heating the upper part of the assembly (24).

3. Method according to claim 2, characterized in that the upper part of the assembly (24) is heated so as to raise the temperature of the gases by at least about 50°C.

4. Method according to any one of the claims 1 to 3, characterized in that a diametral deformation is measured on each rod (10).

5. Method according to claim 4, in combination with either of the claims 2 and 3, characterized in that a diametral deformation is measured in a lower part of each rod (10).

6. Method according to any one of the claims 1 to 5, characterized in that the assembly is subjected to a pressure lower than the pressure of the gases by placing this assembly in a pool (36).

7. Installation for detecting leaky rods in a nuclear fuel assembly (24) comprising a bundle of normally sealed rods (10) containing pressurized gases, characterized in that the installation comprises inside a receiving pool (36) for the assembly, a device (42) for varying the temperature of the gases between two given values and a device (44) for measuring a deformation produced on each rod (10) by said device (42) for varying the temperature, said measuring device (44) making it possible to distinguish the leaky rods, which virtually free from deformation, from the sealed rods which warp.

8. Installation according to claim 7, characterized in that the device for varying the temperature is a heating sleeve (42) suitable for covering the upper part of the assembly (24).

9. Installation according to claim 8, characterized in that the heating sleeve (42) heats the water surrounding the upper part of the assembly (24).

10. Installation according to claim 8, characterized in that the heating sleeve (42) heats a gas surrounding the upper part of the assembly (24).

11. Installation according to any one of the claims 7 to 10, characterized in that the measuring device (44) is a device measuring a diametral deformation of each rod.

12. Installation according to claim 11, characterized n that the measuring device (44) is placed close to the lower extremities of the rods (10).

13. Installation according to claim 12, characterized in that the measuring device (44) is mounted on a support (38) provided with positioning means (40) at the lower extremity of the assembly (24).

14. Installation according to claim 13, characterized in that the measuring device (44) is mounted on the support (38) by means of an orthogonal horizontal movement table (50).

15. Installation according to any one of the claims 11 to 14, characterized in that the measuring device (44) includes parallel blades (52) suitable for being inserted on both sides of the rods (10) and sensors (56) supported by these blades, so that one pair of sensors is associated to each rod when the blades are inserted inside the assembly.

16. Installation according to claim 15, characterized in that the sensors (56) include deformation gauges (62) borne by flexible strips (60) secured to the blades (52) and suitable for being brought into contact with the rods (10).

17. Installation according to claim 15, characterized in that the sensors (56) are capacitive sensors rigidly secured to the blades (52) and suitable for being spaced from the rods (10).
